# EUROPÄISCHE PATENTANMELDUNG

(11) **EP 4 521 360 A1**
(43) Veröffentlichungstag der Anmeldung: **12.03.2025**
(21) Anmeldenummer: 23196456.0
(22) Anmeldetag: 11.09.2023
(51) Int. Cl.: G06V 10/82, G06V 20/64

(54) **VERFAHREN UND SYSTEM ZUM AUTOMATISCHEN ANNOTIEREN VON SENSORDATEN**

(71) Anmelder: dSPACE GmbH, 33102 Paderborn (DE)
(72) Erfinder: Romanski, Simon, 76227 Karlsruhe (DE); Rödler, Daniel, 76227 Karlsruhe (DE); Both, Fabian, 76227 Karlsruhe (DE); Wonisch, Andreas, 58199 Mannheim (DE)

(57) **Zusammenfassung**

Die Erfindung betrifft ein computerimplementiertes Verfahren zum automatischen Annotieren von Sensordatenframes eines Raumsensors und eines Flächensensors mit räumlich überlappendem Messbereich. Empfangene Sensordatenframes werden zunächst unabhängig annotiert, wobei jedem erkannten Objekt im Sensordatenframe eine Begrenzungsbox zugeordnet wird. Basierend auf einer zeitlichen Korrelation werden die Sensordatenframes des Raumsensors und die Sensordatenframes des Flächensensors gruppiert. Die dreidimensionale Begrenzungsbox für ein Objekt wird in die Bildebene des Flächensensors projiziert. Wenn ein Qualitätsmaß für die Übereinstimmung zwischen projizierter Begrenzungsbox und zweidimensionaler Begrenzungsbox über einem vordefinierten Schwellenwert liegt, werden die Boxen demselben Objekt zugeordnet und dieses nicht weiter überprüft. Anschließend können Attribute des Objekts ermittelt werden.

## Beschreibung

Die vorliegende Erfindung betrifft Verfahren und Computersysteme zum automatischen Annotieren von Sensordatenframes, insbesondere Datenframes von Bildaufnahmesensoren.

Fortschritte beim autonomen Fahren erfordern große Mengen ausreichend unterschiedlicher Trainingsdaten sowie Validierungsdaten (d.h. unabhängiger Ground-Truth-Daten). Die Aufbereitung von Trainingsdaten startet in der Regel mit dem Aufzeichnen von vielen verschiedenen Fahrtszenarien durch ein Fahrzeug, das mit einem Satz von Sensoren ausgestattet ist, insbesondere Bildaufnahmesensoren, wie etwa einer oder mehreren Kameras, einem Lidar-Sensor und/oder einem Radar-Sensor. Vor dem Verwenden dieser aufgezeichneten Szenarien als Trainingsdaten müssen sie annotiert werden. Die genauen benötigten Annotationen (z.B. die zu unterscheidenden Objektklassen) hängen von jedem Projekt ab und sind in der detaillierten Labeling-Spezifikation angegeben. Größere Annotationsprojekte, die z.B. genug Ground-Truth-Daten zum Validieren eines autonomen Fahrzeugs liefern würden, erfordern eine Automatisierung des Annotationsprozesses.

Automatisierungsansätze benutzen neuronale Netze zum Labeln der aufgezeichneten Sensordaten. Ein anfänglicher Satz der empfangenen Daten wird manuell gelabelt und dann benutzt, um neuronale Netze zu trainieren. Sobald sie ausreichend trainiert sind, können die neuronalen Netze die Masse der aufgezeichneten Bildaufnahmesensordaten annotieren. Verglichen mit einem rein manuellen Ansatz reduziert dies den Aufwand beträchtlich. Jedoch erfordert das Einhalten einer hohen Annotationsqualität immer noch zeitaufwendige Qualitätsüberprüfungen durch Menschen.

Aus der WO 2023/135244 A1 sind ein Verfahren und System zum automatischen Annotieren von Sensordatenframes mittels eines neuronalen Netzes bekannt. Den Sensordatenframes werden Datenpunkte, wie beispielsweise Koordinaten von Begrenzungsboxen oder Eigenschaften von erkannten Objekten zugeordnet. Den Datenpunkten werden Zustandsattribute zugeordnet, welche beispielsweis Umgebungsbedingungen während der Aufnahme des Sensordatenframes beschreiben. Basierend auf den Zustandsattributen werden die Datenpunkte gruppiert, um Korrelationen zwischen Zustandsattributen und der Genauigkeit der Annotationen zu berücksichtigen. Aus einer ersten Gruppe wird eine erste Stichprobe von einem oder mehreren Datenpunkten ausgewählt, und es wird ein Qualitätsmaß für die Datenpunkte in der ersten Stichprobe bestimmt. Wenn das Qualitätsmaß der ersten Stichprobe unter einem vordefinierten Schwellenwert liegt, muss eine manuelle Korrektur erfolgen. Nach dem Empfangen korrigierter Annotationen für die Datenpunkte in der ersten Stichprobe erfolgt ein Nachtrainieren des neuronalen Netzes auf der Grundlage der Datenpunkte in der ersten Stichprobe. Eine Überprüfung weiterer Stichproben, manuelle Korrektur und Nachtrainieren des neuronalen Netzes können so lange wiederholt werden, bis das Qualitätsmaß einer Stichprobe den vordefinierten Schwellenwert übersteigt. Das Verfahren ermöglicht es, Zustandsattribute zu identifizieren, die sich negativ auf die Annotationsqualität auswirken, und das neuronale Netz unter diesen Bedingungen durch selektives Nachtrainieren zu verbessern. Auf diese Weise kann eine hohe Annotationsqualität mit einer reduzierten Anzahl manueller Qualitätsüberprüfungen sichergestellt werden.

Bei der Erkennung von Objekten kann es zu zwei Arten von Fehlern kommen: False Positives (FP), also die vermeintliche Erkennung eines Objekts, obwohl eigentlich kein Objekt vorhanden ist, und False Negatives (FN), also die Nichterkennung eines tatsächlich vorhandenen Objekts. Eine manuelle Korrektur von False Negatives ist deutlich aufwändiger als die von False Positives, da für das Einfügen einer fehlenden Begrenzungsbox auch Geometrieparameter wie die Koordinaten der Eckpunkte eingegeben werden müssen, wohingegen im Fall von FP lediglich die fälschliche Begrenzungsbox gelöscht werden muss. Zusätzlich ist im Fall von FNs aber auch ein erneutes Durchführen des automatischen Annotierens mittels neuronaler Netze erforderlich, da verschiedene Annotationen aufeinander aufbauen und beispielsweise eine Ermittlung von Objektattributen das Vorhandensein bzw. die vorherige Erkennung eines Objekts voraussetzt. Eine Verringerung von False Negatives würde daher - selbst im Falle einer gewissen Zunahme der False Positives - zu einem insgesamt verringerten Aufwand für das Annotieren führen.

Somit werden weiterhin verbesserte Verfahren zum automatischen Annotieren von Sensordaten, insbesondere Bildaufnahmesensordaten, benötigt; es wäre besonders wünschenswert, eine hohe Sensitivität bzw. einen hohen Recall zu erreichen.

Es ist ein Ziel der vorliegenden Erfindung, Verfahren und Computersysteme zum automatischen Annotieren von Sensordatenframes, insbesondere Videoframes oder Lidar-Punktwolken, bereitzustellen.

In einem ersten Aspekt der Erfindung wird ein computerimplementiertes Verfahren zum automatischen Annotieren von Sensordatenframes bereitgestellt; das Verfahren umfasst die Schritte Empfangen einer Vielzahl von Sensordatenframes, umfassend Sensordatenframes eines Raumsensors, insbesondere eines LIDAR-Sensors, und Sensordatenframes eines Flächensensors, insbesondere einer Kamera, wobei die Messbereiche des Raumsensors und des Flächensensors räumlich überlappen; Annotieren der Vielzahl von Sensordatenframes mittels mindestens eines neuronalen Netzes, wobei das Annotieren das Erkennen von Objekten und das Zuordnen einer Begrenzungsbox zu jedem Objekt umfasst; Gruppieren eines Sensordaten-frames des Raumsensors und eines Sensordatenframes des Flächensensors basierend auf einer zeitlichen Korrelation der Messzeitpunkte; Projizieren von mindestens vier Ecken einer dreidimensionalen Begrenzungsbox eines erkannten Objekts, also einer Begrenzungsbox im Sensordatenframe des Raumsensors, in die Bildebene des Flächensensors, um ein projiziertes Rechteck zu erhalten; und Überprüfen, ob der relative Überlapp, also die Intersection over Union, zwischen dem projizierten Rechteck und einer benachbarten zweidimensionalen Begrenzungsbox, also einer Begrenzungsbox im Sensordatenframe des Flächensensors, einen Schwellenwert überschreitet, insbesondere einen Schwellenwert von mindestens 0,50. Falls der relative Überlapp den Schwellenwert überschreitet, erfolgt ein Verknüpfen der dreidimensionalen Begrenzungsbox und der benachbarten zweidimensionalen Begrenzungsbox mit demselben Objekt und ein Durchführen einer Attributerkennung für das Objekt. Falls der relative Überlapp den Schwellenwert nicht überschreitet, erfolgt eine Korrektur der Begrenzungsboxen.

Das Computersystem, welches das erfindungsgemäße Verfahren ausführt, kann als ein einzelner Host-Computer realisiert sein, der einen Prozessor, z. B. einen Allzweck-Mikroprozessor, einen Bildschirm und ein Eingabegerät umfasst. Alternativ kann das Computersystem auch einen oder mehrere Server umfassen, die eine Vielzahl von Verarbeitungselementen wie Prozessorkerne oder dedizierte Beschleuniger aufweisen, wobei die Server über ein Netzwerk mit einem Client verbunden sind, der einen Bildschirm und ein Eingabegerät umfasst. Auf diese Weise kann die Annotierung bzw. die Automatisierungssoftware, welche Komponenten zum automatischen Annotieren umfasst, teilweise oder vollständig auf einem entfernten Server ausgeführt werden, beispielsweise in einer Cloud-Computing-Umgebung, so dass nur eine grafische Benutzeroberfläche lokal ausgeführt werden muss.

Mit einem Raumsensor ist ein Bildaufnahmesensor gemeint, der Rauminformationen bzw. dreidimensionale Informationen liefert, so dass die Messdaten des Raumsensors 3D-Koordinaten umfassen; insbesondere kann es sich um einen LIDAR-Sensor oder einen Radar-Sensor handeln. Mit einem Flächensensor ist ein Bildaufnahmesensor gemeint, der zweidimensionale Informationen liefert, so dass die Messdaten des Flächensensors nur zwei Dimensionen aufweisen; insbesondere kann es sich um eine Kamera handeln.

Eine zeitliche Korrelation der Messzeitpunkte bedeutet, dass die Sensordatenframes innerhalb eines vorgegebenen kurzen Zeitintervalls aufgenommen wurden. Wegen dieser näherungsweisen Gleichzeitigkeit der Messdaten von Raumsensor und Flächensensor müssen Objekte im Überlappungsbereich der Messbereiche auf beiden Sensoren zu sehen sein. Für LIDAR-Sensordaten-Frames bzw. LIDAR-Punktwolken kann ein Mittelwert der Messzeiten der einzelnen Punkte der LIDAR-Punktwolke als Messzeitpunkt des Sensordatenframes verwendet werden. Alternativ kann der Aufnahmezeitpunkt eines Kamerabilds mit Anfangs- und Endzeit des LIDAR-SensorDatenframes verglichen werden, wobei insbesondere von einer gleichzeitigen Aufnahme bzw. einer zeitlichen Korrelation der Sensordatenframes ausgegangen wird, wenn der Aufnahmezeitpunkt des Kamerabilds zwischen Anfangs- und Endzeit der LIDAR-Punktwolke liegt.

Zweckmäßigerweise kann der LIDAR-Sensor-Datenframe vorverarbeitet werden, um eine durch die größere Aufnahmedauer bedingte Verzerrung der Punktwolke zu kompensieren. Vorzugsweise sind Kamera und Lidarsensor aufeinander kalibriert, was anhand einer vorherigen Aufnahme eines Schachbrettmusters erfolgen kann, so dass nur eine geringe Restunsicherheit besteht.

Der relative Überlapp kann durch das Verhältnis zwischen der Schnittmenge zweier Begrenzungsboxen und der Vereinigung der beiden Begrenzungsboxen ermittelt werden; dieses Maß ist auch als Intersection over Union (IoU) bekannt.

Die vorliegende Erfindung basiert auf der Überlegung, dass Begrenzungsboxen, die auf zwei voneinander unabhängigen Sensordatenframes vorhanden sind und einen hinreichenden relativen Überlapp aufweisen, ohne manuelle Qualitätsüberprüfung verwendet werden können. Dadurch, dass sie in zwei verschiedenen Sensormodalitäten, insbesondere einer LIDAR-Messung und einem Kamerabild, vorhanden sind, ist die Wahrscheinlichkeit eines Fehlers äußerst gering. Die entsprechenden Objekte in der Punktwolke und dem Kamerabild können daher automatisch mit demselben Objekt verknüpft werden; dies kann beispielsweise durch Zuordnung derselben Objekt-Identifikationsnummer erfolgen. Indem die zeitliche Korrelation als Plausibilitätscheck verwendet wird, kann also automatisiert das Vorhandensein eines Objekts bestätigt werden. Zum einen muss kein weiterer Aufwand in die Verifizierung des Objekts investiert werden, zum anderen werden nachfolgenden Auswerteschritte zur Ermittlung von Objektattributen nur auf bestätigten Objekten angewendet, so dass Zeitaufwand und Energie gespart werden.

Vorzugsweise erfolgt vor dem Gruppieren eines Sensordatenframes des Raumsensors und eines Sensordatenframes des Flächensensors basierend auf einer zeitlichen Korrelation der Messzeitpunkte ein Tracking von Objekten in aufeinanderfolgenden Sensordatenframes des Raumsensors und/oder ein Tracking von Objekten in aufeinanderfolgenden Sensordatenframes des Flächensensors. Das Tracking, also das Verfolgen eines Objekts, nutzt Beziehungen zwischen aufeinanderfolgenden Aufnahmen desselben Objekts, und berücksichtigt zweckmäßigerweise auch physikalische Gesetze, insbesondere kinematische Gleichungen, zur Plausibilisierung von Objekten. Hierbei wird der zeitliche Kontext berücksichtigt, wie z.B. das ein Objekt sich zunächst in Randnähe bewegen muss, bevor es dauerhaft verschwinden kann. Beim Tracking werden die Daten eines Sensors jeweils unabhängig von Daten eines anderen Sensors betrachtet.

Bevorzugt umfasst das Projizieren von mindestens vier Ecken einer Begrenzungsbox im Sensordatenframe des Raumsensors in die Bildebene des Flächensensors, eine Auswahl eines Rechtecks, insbesondere des größten aus der Projektion erhaltenen Rechtecks, und es erfolgt zweckmäßigerweise für das projizierte Rechteck und/oder die Begrenzungsbox des Flächensensors eine Regression der Größe. Die Regression der Größe kann zweckmäßigerweise mit einem auf die Ermittlung der optimalen Größe einer Begrenzungsbox trainierten neuronalen Netz erfolgen. Insbesondere im Fall einer schlechten Kalibrierung der Relativorientierung zwischen Raumsensor und Flächensensor kann die Regression der Größe für eine deutlich verbesserte Erkennung sorgen, weil sonst z.B. ein Winkelversatz von +- 2 Grad für ein entferntes Objekt dazu führt, dass dieses fälschlich als zwei getrennte Objekte erkannt würde. Eine Regression der Größe kann vor oder nach einer Ermittlung des relativen Überlapps erfolgen. In einer bevorzugten Ausführungsform wird zunächst auf eine Verdeckung geprüft, wobei insbesondere ein für Occlusion Detection trainiertes neuronales Netz eingesetzt wird; nach erfolgter Verknüpfung der dreidimensionalen Begrenzungsbox und der zweidimensionalen Begrenzungsbox erfolgt anschließend eine Regression der Größe für die Begrenzungsbox des Objekts, wobei die projizierte Begrenzungsbox oder die Begrenzungsbox des Flächensensors als Begrenzungsbox des Objekts gewählt werden kann. Prinzipiell kann alternativ auch eine Regression der Größe vor der Überprüfung des relativen Überlapps erfolgen.

Vorzugsweise umfasst die Korrektur der Begrenzungsboxen ein Empfangen korrigierter Annotationen für die Sensordatenframes der Stichprobe und ein Nachtrainieren des neuronalen Netzes mittels der Sensordatenframes der Stichprobe. Indem das neuronale Netz nachtrainiert wird, wenn ein unzureichender Überlapp als Anzeichen von False Negatives erkannt wurde, kann die Qualität der automatischen Plausibilitätsüberprüfung immer weiter verbessert werden.

Bevorzugt umfasst die Korrektur der Begrenzungsboxen bei Vorhandensein einer Begrenzungsbox im Sensordatenframe des Raumsensors ein Empfangen einer Feststellung, ob eine fälschliche Objekterkennung vorlag, wobei wenn wirklich ein Objekt vorhanden war, ein Projizieren der Ecken der dreidimensionalen Begrenzungsbox des Objekts, in die Bildebene des Flächensensors erfolgt, um ein projiziertes Rechteck zu erhalten, und wobei anschließend eine Regression der Größe des projizierten Rechtecks vorgenommen wird. Die Regression der Größe kann zweckmäßigerweise mit einem auf die Ermittlung der optimalen Größe einer Begrenzungsbox trainierten neuronalen Netz erfolgen. Nachdem die vorhandene dreidimensionale Begrenzungsbox in einer manuellen Überprüfung als Erkennung eines echten Objekts verifiziert wurde, so dass ein False Positive ausgeschlossen werden kann, wird die 3D-Box zweckmäßigerweise automatisch in die Bildebene projiziert und mittels automatischer Regression der Größe eine zweidimensionale Begrenzungsbox passender Größe und Position erstellt und mit demselben Objekt verknüpft. Die zweidimensionale Begrenzungsbox wird hierbei mit demselben Objekt wie die dreidimensionale Begrenzungsbox verknüpft.

Vorzugsweise umfasst die Korrektur der Begrenzungsboxen bei Vorhandensein einer Begrenzungsbox im Sensordatenframe des Flächensensors ein Empfangen einer Feststellung, ob eine fälschliche Objekterkennung vorlag, wobei wenn wirklich ein Objekt vorhanden war, ein Projizieren von Messpunkten der Punktwolke des Raumsensors, in die Bildebene des Flächensensors erfolgt, wobei die Messpunkte, deren Projektion innerhalb der zweidimensionalen Begrenzungsbox angeordnet ist, in der Punktwolke hervorgehoben werden. Die Messpunkte in der Punktwolke des Raumsensors, deren Projektion innerhalb der zweidimensionalen Begrenzungsbox des Flächensensors liegt, gehören mit hoher Wahrscheinlichkeit zu dem fälschlich übersehenen Objekt. Indem diese hervorgehoben werden, wird der Überprüfungsaufwand für die Punktwolke verringert. Das Hervorheben kann mittels einer farblichen Änderung in einer grafischen Darstellung für einen menschlichen Qualitätsprüfer und/oder einer Änderung von Intensität und/oder Gewichtung der betreffenden Messpunkte für eine automatische Auswertung mittels eines neuronalen Netzes erfolgen. Die aus der manuellen Korrektur oder automatischen Auswertung resultierende dreidimensionale Begrenzungsbox wird zweckmäßigerweise mit demselben Objekt wie die zweidimensionale Begrenzungsbox verknüpft.

In einer Ausführungsform umfassen die Vielzahl von Sensordatenframes neben Sensordatenframes eines Raumsensors, insbesondere eines LIDAR-Sensors, auch Sensordatenframes von mindestens zwei Flächensensoren, insbesondere Kameras, wobei die Messbereiche des Raumsensors und des ersten Flächensensors in einem ersten Überlappungsbereich räumlich überlappen, und wobei die Messbereiche des Raumsensors und des zweiten Flächensensors in einem zweiten Überlappungsbereich räumlich überlappen, wobei für Objekte im ersten Überlappungsbereich ein automatisches Annotieren nach dem erfindungsgemäßen Verfahren unabhängig von Sensordatenframes des zweiten Flächensensors erfolgt, und wobei für Objekte im zweiten Überlappungsbereich ein automatisches Annotieren nach dem erfindungsgemäßen Verfahren unabhängig von Sensordatenframes des ersten Flächensensors erfolgt. In der Regel umfasst der Messbereich des Raumsensors die Messbereiche der verschiedenen Flächensensoren, so dass ein Bezug zwischen den Messbereichen von zwei Flächensensoren, insbesondere zwei Kameras, zweckmäßigerweise über den Sensordatenframe des Raumsensors, insbesondere des LIDAR-Sensors, hergestellt wird. Somit können Überlappungsbereiche zwischen verschiedenen Flächensensoren und dem Raumsensor unabhängig voneinander ausgewertet werden.

Bevorzugt umfasst das Durchführen der Attributerkennung für das Objekt das Zuordnen mindestens eines Objektattributs zu dem Objekt und das Zuordnen mindestens eines Zustandsparameters zu dem Objektattribut. Weiterhin umfasst das Verfahren ferner die Schritte Gruppieren der Objektattribute basierend auf dem mindestens einen Zustandsparameter, wobei eine erste Gruppe Objektattribute umfasst, für die der mindestens eine Zustandsparameter in einem definierten Wertebereich liegt; Auswählen einer Stichprobe von einem oder mehreren Objektattributen aus der ersten Gruppe und Bestimmen eines Qualitätsmaßes für die Objektattribute in der Stichprobe. Falls das Qualitätsmaß der Stichprobe unter einem vordefinierten Schwellenwert liegt, umfasst das Verfahren ferner die Schritte Empfangen korrigierter Annotationen für die Datenpunkte in der Stichprobe, und Nachtrainieren des neuronalen Netzes auf der Grundlage der Datenpunkte in der ersten Stichprobe.

Es ist vorteilhaft, wenn nach der Attributerkennung ein Clustern bzw. Gruppieren der Objektattribute bzw. Datenpunkte nach an sich bekannten Verfahren erfolgt, um solche Zustandsparameter bzw. Zustandsattribute zu identifizieren, die sich negativ auf die Annotationsqualität auswirken. Die erfindungsgemäße Betrachtung der Korrelation ermöglicht es auf effiziente Weise, das Vorhandensein von Objekten zu erkennen, wobei die Größe der Begrenzungsboxen noch nicht optimal sein muss. Indem in einem nachfolgenden Schritt ein gemeinsames Gruppieren bzw. Clustern der Boxkoordinanten für demselben Objekt zugeordnete zweidimensionale Begrenzungsboxen und dreidimensionale Begrenzungsboxen erfolgt, können auch Einflussfaktoren auf die optimale Boxgrößen identifiziert werden. Weil andere Objektattribute häufig aus den Daten eines einzelnen Sensors ermittelt werden, insbesondere eines Flächensensor, sind die für diesen Sensor relevanten Bedingungen bzw. Zustandsparameter entscheidend für die Qualität der Attributerkennung. Diese können anhand der Stichprobe erkannt und das neuronale Netz für die Erkennung des jeweiligen Objektattributs nachtrainiert werden. Wenn die Annotierungsqualität weiterhin verbesserungsfähig ist, können eine Überprüfung weiterer Stichproben, manuelle Korrektur und Nachtrainieren des neuronalen Netzes so lange wiederholt werden, bis das Qualitätsmaß einer Stichprobe den vordefinierten Schwellenwert übersteigt. Für Zustandsattribute, die sich negativ auf die Annotationsqualität auswirken, kann das neuronale Netz für das jeweilige Objektattribut unter ungünstigen Bedingungen durch selektives Nachtrainieren verbessert werden. Die Annotationsqualität wird gezielt und mit geringem Aufwand verbessert.

Nach erfolgreicher Stichprobe können die Sensordatenframes exportiert werden. Das Exportieren der annotierten Frames kann beispielsweise ein Speichern der Frames auf einem externen Datenträger und/oder ein Konvertieren bzw. Zusammenfassen in ein vorgegebenes Datenformat umfassen. Durch die feine Granularität der Datenpunkte wäre prinzipiell auch eine Auslieferung von teilweise annotierte Sensordatenframes möglich. Der besseren Übersichtlichkeit halber kann es vorteilhaft sein, erst dann Sensordatenframes an Kunden auszuliefern, wenn für alle vorkommenden Typen von Datenpunkten ein hinreichend nachtrainiertes neuronales Netz verfügbar ist - und somit die Sensordatenframes vollständig annotiert werden können.

Als Qualitätsmaß kann beispielsweise eine relative Überlappung zwischen einer automatisch erstellten Begrenzungsbox und einer manuell im Rahmen der Qualitätskontrolle erstellten oder angepassten Begrenzungsbox herangezogen werden. Auch kann eine maximale Anzahl und/oder ein maximaler Anteil falsch zugeordneter Objektattribute gefordert werden und/oder eine maximale Abweichung für numerische Objektattribute vorgegeben werden. Das Qualitätsmaß wäre dann beispielsweise unterhalb des vordefinierten Schwellenwerts, wenn eine zu große Anzahl von Objektattributen außerhalb vorgegebener Wertebereiche liegt. Bei der Bestimmung des Qualitätsmaßes können auch kombinierte Bedingungen herangezogen werden, beispielsweise durch gewichtetes Zusammenfassen von Einzelwerten.

Die Sensordatenframes von Raumsensor und Flächensensor sind Bilddatenframes, umfassen also Daten eines bildgebenden Sensors, wie etwa einer oder mehreren Kameras, einem Lidar-Sensor und/oder einem Radar-Sensor. Die empfangenen Sensordaten können auch zusätzliche Sensordaten umfassen, die gleichzeitig mit den Bilddatenframes aufgezeichnet wurden, wie etwa eine GPS-Position, eine Beschleunigung des Fahrzeugs oder Daten von einem Regensensor. Die Zustandsparameter können ein geographischer Ort, eine Tageszeit, eine Wetterbedingung, eine Sichtbedingung, ein Straßentyp, ein Abstand zu einem Objekt und/oder eine Verkehrsdichte, eine Größe einer Begrenzungsbox, ein Ausmaß einer Verdeckung und/oder Abschneidung sein, aber auch eine Ego-Fahrzeuggeschwindigkeit, ein Kameraparameter, ein Farbbereich und/oder ein Kontrastmaß eines von einer Begrenzungsbox umfassten Bereichs, eine Fahrtrichtung des Ego-Fahrzeugs, und/oder astronomische Informationen wie die Sonnenposition relativ zur Fahrtrichtung des Ego-Fahrzeugs umfassen. Bei dem Objektattribut kann es sich beispielsweise um eine Klasse eines Objekts oder eine Aktivierung eines Lichtindikators, wie eines Blinkers oder eines Bremslichts handeln.

Bevorzugt umfasst das Gruppieren der Objektattribute eine Bestimmung von Clustern in einem mehrdimensionalen Raum, insbesondere unter Verwendung eines Nearest-Neighbor-Algorithmus und/oder eines Unsupervised-Learning-Ansatzes und/oder eines Machine-Learning Klassifikationsmodells. Vorzugsweise werden Objektattribute eines Typs durch das Machine-Learning Klassifikationsmodell genau einem von mindestens zwei Clustern zugeordnet, welche unterschiedliche erwartete Qualitätslevel aufweisen. Die Zuordnung zu einem Cluster kann durch Klassifikation oder Gruppierung in einem mehrdimensionalen Raum, der durch eine Anzahl von Zustandsparametern aufgespannt wird, geschehen. Anhand der kombinierten statischen und dynamischen Zustandsparameter können die einzelnen Objektattribute somit verschiedenen Clustern zugeordnet werden. Es kann aber auch vorgesehen sein, alle oder eine vorgegebene Menge von Zustandsparametern als Kontext der Objektattribute zu nutzen, um zu bestimmen, welche Zustandsparameter einen merklichen Einfluss auf die Qualität der Objektattribute dieses Typs haben.

Ein Aspekt der Erfindung betrifft auch ein nichtflüchtiges computerlesbares Medium, enthaltend Anweisungen, die, wenn sie durch einen Mikroprozessor eines Computersystems ausgeführt werden, das Computersystem veranlassen, das erfindungsgemäße Verfahren wie oben oder in den angefügten Ansprüchen beschrieben auszuführen.

In einem weiteren Aspekt der Erfindung ist ein Computersystem vorgesehen, das einen Host-Computer umfasst, der einen Prozessor, einen Arbeitsspeicher, eine Anzeige, eine Vorrichtung für menschliche Eingabe und einen nichtflüchtigen Speicher, insbesondere eine Festplatte oder ein Festkörperlaufwerk, umfasst. Der nichtflüchtige Speicher enthält Anweisungen, die, wenn sie durch den Prozessor ausgeführt werden, das Computersystem veranlassen, das erfindungsgemäße Verfahren auszuführen.

Der Prozessor kann ein Universal-Mikroprozessor sein, der üblicherweise als die Zentraleinheit eines Personal Computers verwendet wird, oder er kann ein oder eine Vielzahl von Verarbeitungselementen umfassen, die ausgelegt sind zum Ausführen spezieller Berechnungen, wie etwa einen Grafikprozessor. In alternativen Ausführungsformen der Erfindung kann der Prozessor durch eine programmierbare Logikvorrichtung ersetzt oder ergänzt werden, wie etwa einen FPGA, der dazu konfiguriert ist, einen festen Funktionsumfang bereitzustellen, und/oder einen IP-Core-Mikroprozessor umfassen kann.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine beispielhafte Ausführungsform eines Computersystems,
- Figur 2: ein Beispiel eines Sensordatenframes mit einem schematischen Diagramm möglicher Datenpunkte in dem Einschub links oben,
- Figur 3: ein schematisches Diagramm eines Automatisierungssystems, das ein Verfahren gemäß der Erfindung durchführt,
- Figur 4: ein schematisches Diagramm eines Fahrzeugs mit überlappenden Messbereichen zweier Sensoren,
- Figur 5a: ein beispielgemäßes Kamerabild mit einer projizierten 3D-Begrenzungsbox, und
- Figur 5b: ein beispielgemäßes Kamerabild mit einer 2D-Begrenzungsbox.

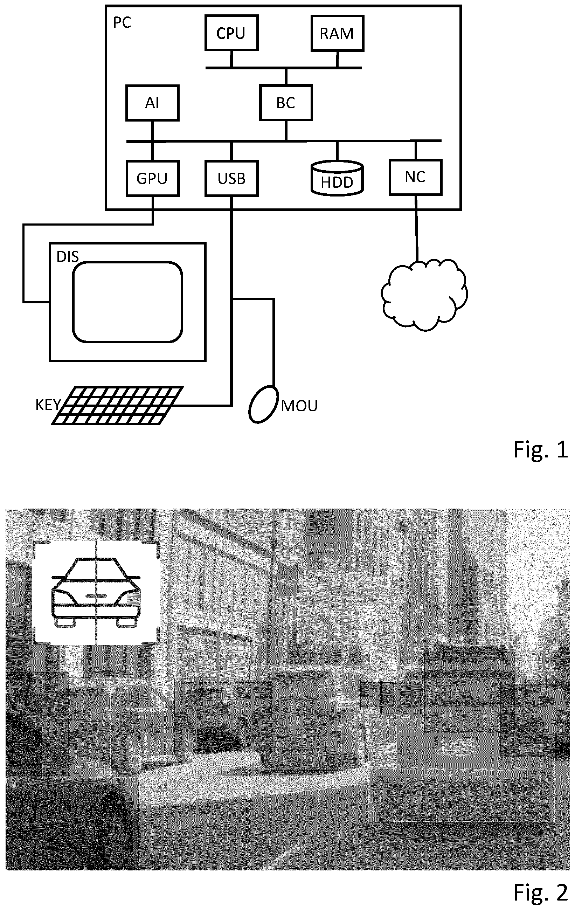

Fig. 1 stellt eine beispielhafte Ausführungsform eines Computersystems dar.

Die gezeigte Ausführungsform umfasst einen Host-Computer PC mit einer Anzeige DIS und Benutzerschnittstellenvorrichtungen, wie etwa einer Tastatur KEY und einer Maus MOU; ferner kann ein externer Server über ein Netzwerk angeschlossen sein, wie durch ein Wolkensymbol angedeutet.

Der Host-Computer PC umfasst mindestens einen Prozessor CPU mit einem oder mehreren Kernen, einen Arbeitsspeicher RAM und eine Anzahl von Geräten, die an einen örtlichen Bus (wie etwa PCI-Express) angeschlossen sind, der Daten mit der CPU über einen Buscontroller BC austauscht. Die Geräte umfassen z.B. einen Grafikprozessor GPU zum Ansteuern der Anzeige, einen Controller USB zum Anschließen von Peripheriegeräten, einen nichtflüchtigen Speicher HDD, wie etwa eine Festplatte oder eine Solid State Disk, und eine Netzwerkschnittstelle NC. Ferner kann der Host-Computer einen dedizierten Beschleuniger AI für neuronale Netze umfassen. Der Beschleuniger AI kann ausgeführt sein als ein programmierbarer Logikbaustein, wie etwa einen FPGA, als ein Grafikprozessor, der für allgemeine Berechnungen geeignet ist, oder als eine anwendungsspezifische integrierte Schaltung. Vorzugsweise enthält der nichtflüchtige Speicher Anweisungen, die, wenn sie durch einen oder mehrere Kerne des Prozessors CPU ausgeführt werden, das Computersystem veranlassen, ein erfindungsgemäßes Verfahren auszuführen.

In alternativen Ausführungsformen, in der Figur als eine Wolke angedeutet, kann das Computersystem einen oder mehrere Server umfassen, die ein oder mehrere Verarbeitungselemente umfassen, wobei die Server über ein Netzwerk mit einem Client wie dem Host-Computer PC verbunden sind. Somit kann die Annotationsumgebung teilweise oder vollständig auf einem entfernten Server ausgeführt werden, wie etwa in einer Cloud-Computereinrichtung. Als Client können alternativ zu einem Host-Computer auch mobile Endgeräte eingesetzt werden; so kann eine grafische Benutzerschnittstelle der Annotationsumgebung insbesondere auf einem Smartphone oder einem Tablet mit einer Touchscreen-Benutzeroberfläche ausgeführt werden.

Fig. 2 zeigt ein Kamerabild als einen beispielhaften Sensordatenframe mit einem schematischen Diagramm möglicher Datenpunkte in dem Einschub links oben.

Das in der Figur gezeigte Foto einer Großstadtszene kann ein Einzelbild eines Flächensensors oder Teil einer Videoaufzeichnung sein. Allgemein kann eine durch einen Kunden bereitgestellte Aufzeichnung Sensordatenframes umfassen, die einen aufeinanderfolgenden Kontext darstellen, wie z.B. fünf Minuten Fahrt, aufgezeichnet über bildgebende Sensoren wie eine Kamera und einen LiDAR-Sensor. Videoaufzeichnungen könnten beispielsweise aus einer Reihe aufeinanderfolgender Frames bestehen, die wiederum eine Reihe von Objekten beinhalten. Mittels mindestens eines neuronalen Netzes wird die Aufzeichnung verarbeitet, um Annotationen zu erstellen. Annotationen können eine Vielzahl von Datenpunkten umfassen, wobei jeder Datenpunkt einen spezifischen Aspekt beschreibt.

Ein Datenpunkt ist ein Parameter, der eine bestimmte Eigenschaft einer Aufzeichnung beschreibt, und kann auf alle Detailebenen angewendet werden. Detailebenen können die gesamte Aufzeichnung, eine Reihe aufeinanderfolgender oder zufälliger Frames, ein einzelner Frame oder ein Objekt auf einem Frame sein. Ein spezifisches Beispiel wäre eine Annotation für ein Auto, die aus einer Begrenzungsbox besteht, welche die Position des Autos innerhalb einer gewissen Genauigkeit beschreibt, eine vertikale Linie, die eine Kante des Autos markiert, eine Klassifizierung, um den Typ des Autos zu beschreiben, Attribute für Abschneidung oder Verdeckung, Blinker, Bremslichter, Farbe und so weiter. Im Rahmen der vorliegenden Erfindung ist es vorteilhaft, zwischen Begrenzungsboxen als primären Datenpunkten, welche das Vorhandensein (aber auch die Koordinaten) eines Objekts beschreiben und sekundären Datenpunkten zu unterscheiden, die als Objektattribute Eigenschaften eines bestehenden Objekts genauer beschreiben. Prinzipiell können sekundäre Datenpunkte die Klasse eines Objekts, die Aktivierung eines Blinkers und/oder Bremslichts, Farben, Unterklassen, Tracking-Informationen, Verdeckungsgrad (Occlusion), Abschneidungsgrad (Trunkierung), komplexe Klassen, die die Relevanz eines Objekts/Frames/Clips beschreiben, Ton, Text oder eine beliebige andere automatisiert ermittelbare Information sein. Nur wenn ein Objekt vorhanden ist, also mindestens ein primärer Datenpunkt vorliegt, kann sinnvollerweise eine Annotation mit sekundären Datenpunkten erfolgen.

In dem Einschub links oben in der Figur sind verschiedene Datenpunkte für ein Auto im Sensordatenframe eines Flächensensors dargestellt. Autos können von verschiedenen Typen sein, z.B. ein Lieferwagen, ein SUV oder ein Sportwagen. Die Position oder vielmehr die Maße eines Autos sind im Allgemeinen durch eine Begrenzungsbox angegeben, d.h. einen rechteckigen Rahmen oder ein Quader, der das Auto umschließt. Vertikale Linien geben die Begrenzungen des Autos an bzw. ermöglichen eine bessere Andeutung der Pose des Autos. Ein weiterer möglicher Datenpunkt für ein Auto ist die Aktivierung einer Leuchtanzeige, wie etwa des in dem Einschub gezeigten Fahrtrichtungsanzeigers bzw. Blinkers.

Eine Vielzahl von Autos ist in dem Frame vorhanden, jedes durch eine Begrenzungsbox umschlossen. Autos können vollständig sichtbar sein, wie etwa das direkt vor der Kamera fahrende, oder sie können verdeckt sein. Die Verkehrsdichte der Großstadtszene kann die Annotationsqualität beeinträchtigen, indem sie z.B. eine genaue Bestimmung der Grenzen der Begrenzungsbox durch Verdecken schwierig macht.

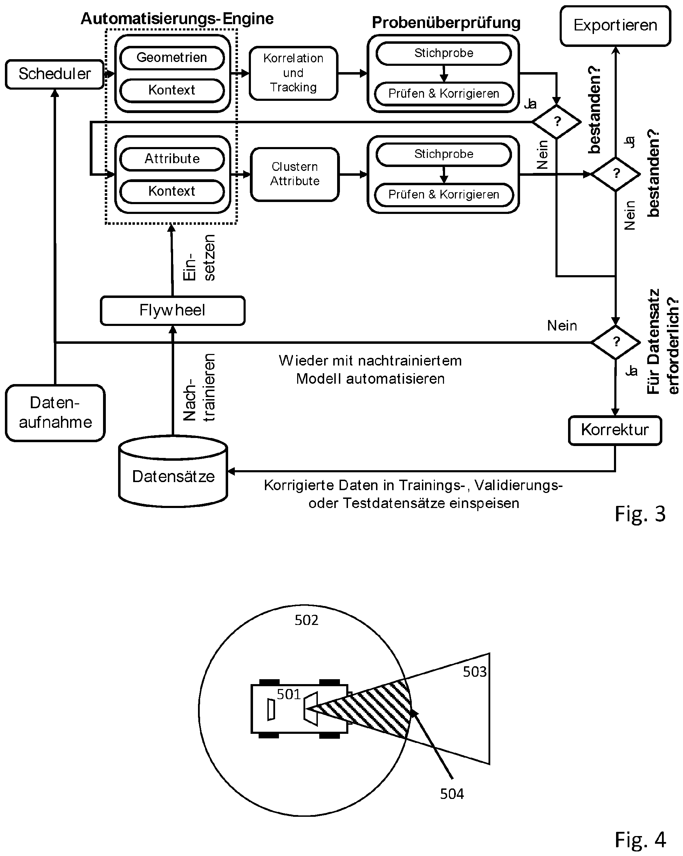

Fig. 3 zeigt ein schematisches Diagramm eines Automatisierungssystems, das ein Verfahren gemäß der Erfindung durchführt. Das Automatisierungssystem implementiert verschiedene Schritte des Verfahrens in dedizierten Komponenten und ist gut für die Ausführung in einer Cloud-Computing-Umgebung geeignet.

In einer ersten Komponente, "Datenaufnahme", werden unsortierte Aufzeichnungen von einem Kunden empfangen. Die Aufzeichnungen können normalisiert werden, z.B. in Sensordatenframes bzw. Bilder aufgeteilt werden, um eine einheitliche Verarbeitung zu ermöglichen. Diese Komponente kann auch eine Anreicherungsphase umfassen, in der die Sensordatenframes der Aufzeichnungen automatisch mit Metadaten angereichert werden, die für die Messung der Automatisierungsqualität relevant sind. So kann beispielsweise jedem Bild der geografische Ort zugeordnet werden, an dem es aufgenommen wurde, insbesondere auf der Grundlage der GPS-Koordinaten, die gleichzeitig mit den Bildern empfangen wurden. Im Kontext des autonomen Fahrens könnten Metadaten oder Zustandsparameter, die für die Qualität der Annotation relevant sind, eine Wetterbedingung, einen Straßentyp, eine Lichtbedingung und/oder eine Tageszeit umfassen.

Für die Effizienz der Automatisierung ist es sinnvoll, in den folgenden Schritten bzw. Komponenten Chargen von Frames bzw. Einzelbildern gemeinsam zu verarbeiten. Bei Projekten mit verschachtelter Aufnahme und Verarbeitung von Bildern kann es vorteilhaft sein, Frames, die unter denselben Umgebungsbedingungen aufgenommen wurden, zu akkumulieren, bis eine vorgegebene Chargengröße erreicht ist, bevor mit den weiteren Verarbeitungsschritten fortgefahren wird.

In einer zweiten Komponente, dem "Scheduler", werden verschiedene Chargen von Sensordatenframes bzw. Einzelbildern für das Annotieren durch eine Automatisierungs-Engine eingeplant. Der Scheduler kann dabei eine oder mehrere Automatisierungskomponenten zur Annotation der Frames mit einem oder mehreren Datenpunkten für die Ausführung durch die Automatisierungs-Engine auswählen. Weiterhin kann der Scheduler die zu verarbeitende Charge von Frames auf der Grundlage der Verfügbarkeit neuer Versionen von Automatisierungskomponenten auswählen. Eine Automatisierungskomponente kann einen einzelnen Datenpunkt wie eine vertikale Linie oder mehrere zusammenhängende Datenpunkte wie die Koordinaten einer Begrenzungsbox und eine Objektklasse erzeugen. Bei den Automatisierungskomponenten kann es sich um neuronale Netze oder eine andere auf maschinellem Lernen basierende Technologie handeln, die auf überwachte, halbüberwachte oder nicht überwachte Weise aus Datenproben lernt.

In einer dritten Komponente, der "Automatisierungs-Engine", wird eine Charge von Sensordatenframes von mindestens einer Automatisierungskomponente verarbeitet, die den Frames Annotationen zuordnet. Das Automatisierungssystem kann verschiedene Automatisierungskomponenten ausführen, um unterschiedliche Annotationen bzw. Datenpunkte zu erstellen. Vorzugsweise sind die Datenpunkte mit Metadaten versehen, welche die Version der verwendeten Automatisierungskomponente beschreiben; das Automatisierungssystem kann die Datenpunkte und zugeordnete Metadaten in einer oder mehreren Datenbanken speichern. Einige der mit einem Datenpunkt verbundenen Zustandsattribute können von einer dedizierten Automatisierungskomponente bestimmt werden. Der "Kontext", d. h. die Zustandsattribute für einen Datenpunkt, kann Attribute umfassen, die selbst ein Datenpunkt sind. So kann beispielsweise die Genauigkeit der Platzierung einer vertikalen Linie von der Größe der Begrenzungsbox abhängen, in der die Linie zu zeichnen ist.

Gemäß der Erfindung wird zunächst mindestens eine Automatisierungskomponente zur Objektdetektion ausgeführt, die Begrenzungsboxen um erkannte Objekte erzeugt, und somit "Geometrien" der Objekte ermittelt. Hierbei werden sowohl Sensordatenframes eines Raumsensors als auch Sensordatenframes eines Flächensensors ausgewertet.

Anschließend wird eine Komponente zu "Korrelation und Tracking" ausgeführt, wobei zweckmäßigerweise zunächst ein Tracking von Objekten zwischen aufeinanderfolgenden Frames des Raumsensors und ein Tracking von Objekten zwischen aufeinanderfolgenden Frames des Flächensensors erfolgt. Beim Tracking bzw. Verfolgen von Objekten wird ein zeitlicher Kontext zur Plausibilisierung von Begrenzungsboxen betrachtet. Objekte müssen sich anhand kinematischer Gesetze bewegen und können nicht einfach verschwinden, ohne z.B. den Rand des Messbereichs des Sensors erreicht zu haben (oder von einem näheren Objekt verdeckt zu werden, welches dann im Sensordatenframe sichtbar ist). Gemäß der Erfindung wird auch der räumliche Kontext zweier überlappender Sensorbereiche zur Plausibilisierung betrachtet. Wenn beispielsweise die Kamera ein Objekt sieht, muss auch der LIDAR-Sensor ein Objekt messen bzw. umgekehrt. Durch Nutzung der Korrelation zwischen zwei Sensoren in überlappenden Messbereichen kann die Sensitivität bzw. der Recall, also die korrekte Erkennung des Vorhandenseins eines Objekts erhöht werden.

Figur 4 zeigt ein schematisches Diagramm eines Fahrzeugs mit überlappenden Messbereichen zweier Sensoren. In dem aus der Vogelperspektive dargestellten Diagramm ist ein nach rechts orientiertes Fahrzeug 501 zu sehen, welches einen Raumsensor, wie einen LIDAR-Sensor, und einen Flächensensor, wie eine Kamera aufweist. Der Messbereich 502 des Raumsensors umfasst die gesamte Umgebung des Fahrzeugs, d.h. es wird ein Winkel von 360 Grad umstrichen, wobei die Reichweite eines LIDAR-Sensors durch die maximal zulässige ausgesandte Pulsenergie und die Empfindlichkeit des Sensors für das rückgestreute Licht begrenzt ist. Der Messbereich 503 des Flächensensors ist ein nach rechts gerichteter Kegel, wobei die maximale Entfernung, unter der ein Objekt erkennbar ist, von den aktuell herrschenden Lichtbedingungen abhängig sein kann. Das erfindungsgemäße Verfahren ist auf Objekte im Überlappungsbereich 504 von Raumsensor und Flächensensor anwendbar. Dieser deckt die Fahrtrichtung des Fahrzeugs und somit die für Fahrfunktionen wichtigste Region ab. Moderne Fahrzeuge weisen häufig weitere Kameras, wie z.B. eine Rückfahrkamera auf, so dass in der Regel mehrere Überlappungsbereiche vorliegen und auch der gesamte Messbereich des Raumsensors abgedeckt sein kann.

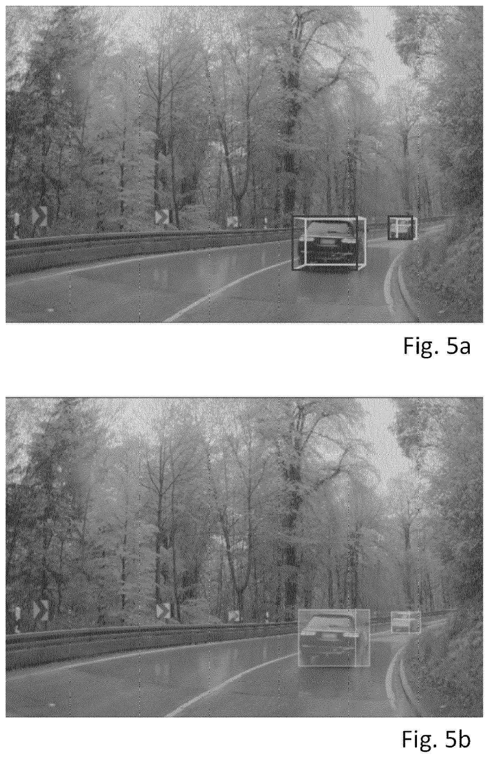

Figur 5a zeigt ein beispielgemäßes Kamerabild mit einer projizierten 3D-Begrenzungsbox. Dreidimensionale Begrenzungsboxen von erkannten Objekten können in das Kamerabild projiziert werden, indem alle acht Ecken der dreidimensionalen Begrenzungsbox auf die Bildebene projiziert werden. Dann kann beispielsweise das größte resultierende Rechteck für die Überprüfung der Korrelation mit dem Flächensensor (der Kamera) ausgewählt werden.

Figur 5b zeigt ein beispielgemäßes Kamerabild mit einer 2D-Begrenzungsbox. Die durch die Annotierung eines Kamerabilds ermittelten Begrenzungsboxen sind nach den Achsen ausgerichtete Rechtecke (ggfs. mit einer zusätzlichen vertikalen Linie, die z.B. die Pose eines Fahrzeugs andeutet).

Zurückkehrend zu Figur 3 kann die projizierte 3D-Begrenzungsbox mit der aus dem Flächensensor ermittelten Begrenzungsbox verglichen werden, indem der relative Überlapp, d.h. die Intersection over Union (IoU) berechnet wird. Überschreitet der relative Überlapp einen vorgegebenen Schwellenwert, insbesondere 0.5, dann passen die Begrenzungsboxen zueinander, und sie können demselben Objekt zugeordnet werden.

Anschließend wird eine Komponente zur "Probenüberprüfung" durchgeführt, bei der Begrenzungsboxen ohne hinreichenden Überlapp bzw. verwaiste Begrenzungsboxen, zu denen keine korrespondierende Begrenzungsbox im Sensordatenframe des jeweils anderen Sensors gefunden wurde, überprüft werden und zusätzlich eine Qualitätskontrolle für eine Stichprobe von Datenpunkten durchgeführt wird. Hierfür werden einer ersten Phase, "Stichprobe", Begrenzungsboxen für die Qualitätskontrolle auf der Grundlage von Stichprobenanforderungen ausgewählt. In einer zweiten Phase, "Prüfen und Korrigieren", kann einem menschlichen Qualitätskontrolleur der Frame mit ggfs. vorhandenen Begrenzungsboxen gezeigt werden. Der Kontrolleur kann gefragt werden, ob die Begrenzungsbox korrekt ist, und es kann ihm eine Benutzerschnittstelle zum Justieren der Begrenzungsbox und/oder Hinzufügen einer Begrenzungsbox im Fall von "False Negatives" gezeigt werden.

Wenn ein unzureichender relativer Überlapp vorlag, können zwei Fälle vorliegen: Zum einen kann die Objekterkennung im Sensordatenframe des Raumsensors erfolgt sein, während im Sensordatenframes des Flächensensors kein Objekt erkannt wurde. Es ist dann vorteilhaft, zunächst den Frame des Raumsensors zu zeigen, und zu fragen, ob eine falsch positive Erkennung vorlag. Wenn ja kann die Begrenzungsbox verworfen werden. Falls nein, kann dem Kontrolleur eine automatische Projektion der 3D-Begrenzungsbox in den Frame des Flächensensors, insbesondere das Kamerabild, gezeigt werden. Dies vereinfacht das Einfügen der zweidimensionalen Begrenzungsbox. Die eingefügte Begrenzungsbox und die ursprüngliche dreidimensionale Begrenzungsbox können mit demselben Objekt verknüpft werden. Zum anderen kann die Objekterkennung im Sensordatenframe des Flächensensors erfolgt sein, während im Sensordatenframe des Raumsensors kein Objekt erkannt wurde. Es ist dann vorteilhaft, zunächst den Frame des Flächensensors zu zeigen, und zu fragen, ob eine falsch positive Erkennung vorlag. Wenn ja kann die Begrenzungsbox verworfen werden. Falls nein, können Messpunkte des Raumsensors in die Bildebene des Flächensensors projiziert werden, wobei alle Messpunkte, deren Projektion innerhalb der zweidimensionalen Begrenzungsbox liegt, farblich oder durch ein Erhöhen der Intensität hervorgehoben werden können. Beim Betrachten des dreidimensionalen Sensordatenframes kann der menschliche Kontrolleur - oder eine Annotierungskomponente - dann gezielt die Bereiche mit hervorgehobenen Messpunkten auf das Vorhandensein eines Objekts überprüfen. Dies verringert den Aufwand für die Suche nach False Negatives. Aus der Art und der Anzahl der vorgenommenen Korrekturen bestimmt das Automatisierungssystem zweckmäßigerweise ein Qualitätsmaß. Beispielsweise kann eine Korrektur der Koordinaten einer Begrenzungsbox anhand des Ausmaßes der Abweichung bewertet werden. Fehlende Begrenzungsboxen können mit einem hohen konstanten Fehlerwert oder einem flächenproportionalen Fehlerwert bewertet werden.

In einem nächsten Schritt, Probenüberprüfung "bestanden?", ermittelt das System, ob das Qualitätsmaß der Stichprobe über einem vordefinierten Schwellenwert lag (was auf eine ausreichende Annotationsqualität hinweist). Wenn das Automatisierungssystem feststellt, dass dies der Fall ist (Ja), kann die Ermittlung von Objektattributen für die erkannten Objekte erfolgen. Wenn dies nicht der Fall war (Nein), wird die Auswertung der Charge von Sensordatenframes zurückgestellt, bis eine nachtrainierte Automatisierungskomponente verfügbar. Hierfür kann es vorgesehen die korrigierten Sensordatenframes verwendet werden, und/oder es kann eine zusätzliche Korrektur von Sensordatenframes erfolgen, um eine hinreichende Menge von Trainingsdaten zu erhalten. Die Ausführung wird mit einer Überprüfung "Für Datensatz erforderlich?" fortgesetzt, um zu ermitteln, ob die korrigierten Daten oder zusätzliche Daten für ein Nachtrainieren der betroffenen Automatisierungskomponente zur Objekterkennung verwendet werden sollen.

Bei bestandener Qualitätsüberprüfung führt die Automatisierungs-Engine mindestens eine Komponente zur Ermittlung von Objektattributen aus. Zusätzlich kann zweckmäßigerweise ein "Kontext" aus Zustandsparametern ermittelt werden. Bei den Zustandsparametern kann es sich um Aufnahmebedingungen, wie einen Aufnahmeort oder Lichtverhältnisse, aber auch um andere Datenpunkte, wie eine Größe der Begrenzungsbox bzw. des Objekts handeln. Da Objektattribute häufig nur aus Sensordatenframes eines Umfeldsensors, besonders des Flächensensors bzw. der Kamera, ermittelt werden, können insbesondere für diesen Sensor relevante Parameter einen Einfluss auf die Qualität der Objektattribute haben.

In einem weiteren Schritt, dem "Clustern", werden die einzelnen Datenpunkte bzw. Objektattribute eines bestimmten Typs basierend auf Zustandsparameter gruppiert. Es kann vorgesehen sein, einem Typ der Datenpunkte bestimmte Zustandsparameter zuzuordnen. Die Zustandsparameter für eine Genauigkeit der Koordinaten von Begrenzungsboxen können zum Beispiel die Größe der Begrenzungsbox, die Tageszeit und/oder die Wetterbedingungen bei der Aufnahme des Bildes und/oder eine teilweise Verdeckung des Objekts umfassen. Die Werte der Zustandsparameter der einzelnen Objektattribute können mehrere Cluster in dem von den Zustandsparametern aufgespannten mehrdimensionalen Raum bilden. Verschiedene Cluster können mit einer unterschiedlichen Qualität der Annotationen verbunden sein.

Basierend auf einer Vielzahl von individuellen Datenpunkten bzw. Objektattributen desselben Typs kann das Automatisierungssystem somit Cluster in einem mehrdimensionalen Raum bestimmen, insbesondere unter Verwendung eines Nearest-Neighbor-Algorithmus und/oder eines Unsupervised-Learning-Ansatzes und/oder eines Machine-Learning Klassifikationsmodells. Die ermittelten Cluster können analysiert werden, um ein Kriterium für die Gruppierung von Datenpunkten und/oder die Vorhersage der Annotationsqualität festzulegen, indem Wertebereiche für mindestens eines der Zustandsparameter des Datenpunkts definiert werden.

Vorzugsweise wird die Gruppierung auf der Grundlage definierter Wertebereiche für mehrere Zustandsparamete durchgeführt; sie kann auch auf Basis von Wertebereichen kann auch durch ein neuronales Netz bzw. ein Machine-Learning Klassifikationsmodell erfolgen.

In einer Komponente zur "Probenüberprüfung", wird die Qualitätskontrolle für eine Stichprobe von Objektattributen bzw. Datenpunkten durchgeführt. In einer ersten Phase, "Stichprobe", werden mehrere Datenpunkte für die Qualitätskontrolle auf der Grundlage von Stichprobenanforderungen ausgewählt. Die Häufigkeit und/oder Größe der für eine Gruppe von Datenpunkten entnommenen Stichproben kann in Abhängigkeit von der prognostizierten Qualität der Datenpunkte in der Gruppe gewählt werden; für Datenpunkte, die mit Zustandsattributen verbunden sind, die auf eine schlechte Qualität hindeuten, können häufiger Stichproben genommen werden. In einer zweiten Phase, "Prüfen und Korrigieren", kann einem menschlichen Kontrolleur der Frame mit entsprechenden Annotationen und einer Benutzeroberfläche zur Eingabe von Korrekturen angezeigt werden. Aus der Art und der Anzahl von durch den menschlichen Kontrolleur vorgenommenen Korrekturen bestimmt das Automatisierungssystem ein Qualitätsmaß.

In einem nächsten Schritt, Probenüberprüfung "bestanden?", ermittelt das System, ob das Qualitätsmaß der Stichprobe über einem vordefinierten Schwellenwert lag (was auf eine ausreichende Annotationsqualität hinweist). Wenn das Automatisierungssystem feststellt, dass dies der Fall ist (Ja), kann die Gruppe von Sensordatenframes, die die ausgewählte Probe umfasst, exportiert und an den Kunden ausgeliefert werden. Wenn dies nicht der Fall war (Nein), wird die Ausführung in einem weiteren Schritt zur Verbesserung der Automatisierungskomponenten fortgesetzt.

Im weiteren Schritt "Für Datensatz erforderlich?" wird ermittelt, ob die manuell korrigierte Stichprobe für das erneute Training der Automatisierungskomponente für den Datenpunkt bzw. das Objektattribute verwendet werden soll. Ob dies der Fall ist, kann davon abhängen, wie viele Bilder unter denselben Bedingungen aufgenommen wurden, die bereits für das Training des Modells verwendet wurden. Ist dies nicht der Fall (Nein), wird die Gruppe von Datenpunkten, aus der die Probe entnommen wurde, an den Scheduler zurückgeschickt (Wieder mit nachtrainiertem Modell automatisieren). Sobald eine neu trainierte Automatisierungskomponente für die Datenpunkte verfügbar ist, sendet der Scheduler die Gruppe von Datenpunkten zur erneuten Verarbeitung an die Automatisierungs-Engine. Wenn die korrigierten Stichproben für das Nachtrainieren verwendet werden sollen (Ja), werden die manuell annotierten Datenpunkte in die Trainings-/Validierungs- oder Testdatensätze für das jeweilige neuronale Netz/die Automatisierungskomponente eingespeist. Diese Datensätze werden durch einen Zylinder dargestellt. Zusätzlich können weitere Sensordatenframes in einem Schritt "Korrektur" manuell annotiert werden, um weitere Trainingsdaten zu erhalten. Bei der Korrektur wird zweckmäßigerweise eine manuelle Annotation einer Teilmenge der Gruppe von Sensordatenframes durchgeführt und durch ein Einspeisen der korrigierten Daten in die Trainings-, Validierungs- oder Testdatensätze für das Nachtrainieren des neuronalen Netzes verwendet.

In einer weiteren Komponente, dem "Flywheel", wird das neuronale Netz bzw. die Automatisierungskomponente, welche die bei der Stichprobenprüfung abgelehnten Datenpunkte erzeugt hat, nachtrainiert. Durch das Hinzulernen des neuronalen Netzes wird die Qualität der Automatisierung verbessert. Vorzugsweise werden die Automatisierungskomponenten so weit verbessert, dass für möglichst viele Cluster keine manuelle Überprüfung mehr erforderlich ist. Die Iterationszeiten für das Nachtrainieren sollten so kurz wie möglich sein, um eine schnelle Verbesserung der Effizienz zu ermöglichen.

Flywheel umfasst Techniken zur effizienten Speicherung und Versionierung von Trainingsdatensätzen für jede Automatisierungskomponente bzw. jeden Typ von Datenpunkten, zur Überwachung von Änderungen der Trainingsdatensätze und zum automatischen Triggern eines Nachtrainierens, sobald vordefinierte oder automatisch ermittelte Schwellenwerte für Änderungen der Trainingsdatensätze überschritten werden (z.B. eine vorgegeben Anzahl neuer Beispiele). Darüber hinaus umfasst Flywheel Techniken, um nachtrainierte neuronale Netze automatisch in Automatisierungskomponenten einzusetzen und den Scheduler über Versionsänderungen zu informieren.

Das erfindungsgemäße Verfahren ermöglicht es, die Sensitivität bzw. den Recall in frühen Labeling-Phasen zu erhöhen. Darüber hinaus wird eine qualitative Auswertung der Ergebnisse des Automatisierungssystems ermöglicht. Da die nachgeordneten Schritte zur Ermittlung sekundärer Datenpunkte nur nach zuverlässiger Objekterkennung durchgeführt werden, verringert sich der Annotierungsaufwand; man spart Zeit und Rechenleistung bzw. Energie.

## Patentansprüche

1. Computer-implementiertes Verfahren zum automatischen Annotieren von Sensordaten, wobei das Verfahren umfasst
Empfangen einer Vielzahl von Sensordatenframes, umfassend Sensordatenframes eines Raumsensors, insbesondere eines LIDAR-Sensors, und Sensordatenframes eines Flächensensors, insbesondere einer Kamera, wobei die Messbereiche des Raumsensors und des Flächensensors räumlich überlappen;
Annotieren der Vielzahl von Sensordatenframes mittels mindestens eines neuronalen Netzes, wobei das Annotieren das Erkennen von Objekten und das Zuordnen einer Begrenzungsbox zu jedem Objekt umfasst;
Gruppieren eines Sensordatenframes des Raumsensors und eines Sensordatenframes des Flächensensors basierend auf einer zeitlichen Korrelation der Messzeitpunkte;
Projizieren von mindestens vier Ecken einer dreidimensionalen Begrenzungsbox eines erkannten Objekts, also einer Begrenzungsbox im Sensordatenframe des Raumsensors, in die Bildebene des Flächensensors, um ein projiziertes Rechteck zu erhalten;
Überprüfen, ob der relative Überlapp, also die Intersection over Union, zwischen dem projizierten Rechteck und einer benachbarten zweidimensionalen Begrenzungsbox, also einer Begrenzungsbox im Sensordatenframe des Flächensensors, einen Schwellenwert überschreitet, insbesondere einen Schwellenwert von mindestens 0,50;
Falls der relative Überlapp den Schwellenwert überschreitet, Verknüpfen der dreidimensionalen Begrenzungsbox und der benachbarten zweidimensionalen Begrenzungsbox mit demselben Objekt und Durchführen einer Attributerkennung für das Objekt,
Falls der relative Überlapp den Schwellenwert nicht überschreitet, Korrektur der Begrenzungsboxen.

2. Verfahren nach Anspruch 1, wobei vor dem Gruppieren eines Sensordatenframes des Raumsensors und eines Sensordatenframes des Flächensensors basierend auf einer zeitlichen Korrelation der Messzeitpunkte ein Tracking von Objekten in aufeinanderfolgenden Sensordatenframes des Raumsensors und/oder ein Tracking von Objekten in aufeinanderfolgenden Sensordatenframes des Flächensensors erfolgt.

3. Verfahren nach einem der vorhergehenden Ansprüche, wobei das Projizieren der Ecken einer Begrenzungsbox im Sensordatenframe des Raumsensors in die Bildebene des Flächensensors, eine Auswahl eines Rechtecks, insbesondere des größten aus der Projektion erhaltenen Rechtecks, umfasst, und wobei für das projizierte Rechteck und/oder die Begrenzungsbox des Flächensensors eine Regression der Größe erfolgt.

4. Verfahren nach einem der vorhergehenden Ansprüche, wobei die Korrektur der Begrenzungsboxen ein Empfangen korrigierter Annotationen für die Sensordatenframes der Stichprobe und ein Nachtrainieren des neuronalen Netzes mittels der Sensordatenframes der Stichprobe umfasst.

5. Verfahren nach einem der vorhergehenden Ansprüche, wobei die Korrektur der Begrenzungsboxen bei Vorhandensein einer Begrenzungsbox im Sensordatenframe des Raumsensors ein Empfangen einer Feststellung umfasst, ob eine fälschliche Objekterkennung vorlag, wobei wenn wirklich ein Objekt vorhanden war, ein Projizieren der Ecken der dreidimensionalen Begrenzungsbox des Objekts, in die Bildebene des Flächensensors erfolgt, um ein projiziertes Rechteck zu erhalten, und wobei anschließend eine Regression des projizierten Rechtecks vorgenommen wird.

6. Verfahren nach einem der vorhergehenden Ansprüche, wobei die Korrektur der Begrenzungsboxen bei Vorhandensein einer Begrenzungsbox im Sensordatenframe des Flächensensors ein Empfangen einer Feststellung umfasst, ob eine fälschliche Objekterkennung vorlag, wobei wenn wirklich ein Objekt vorhanden war, ein Projizieren von Messpunkten der Punktwolke des Raumsensors, in die Bildebene des Flächensensors erfolgt, wobei die Messpunkte, deren Projektion innerhalb der zweidimensionalen Begrenzungsbox angeordnet ist, in der Punktwolke hervorgehoben werden.

7. Verfahren nach einem der vorhergehenden Ansprüche, wobei die Vielzahl von Sensordatenframes neben Sensordatenframes eines Raumsensors, insbesondere eines LIDAR-Sensors, auch Sensordatenframes von mindestens zwei Flächensensoren, insbesondere Kameras, umfassen, wobei die Messbereiche des Raumsensors und des ersten Flächensensors in einem ersten Überlappungsbereich räumlich überlappen, und wobei die Messbereiche des Raumsensors und des zweiten Flächensensors in einem zweiten Überlappungsbereich räumlich überlappen, wobei für Objekte im ersten Überlappungsbereich ein automatisches Annotieren gemäß Anspruch 1 unabhängig von Sensordatenframes des zweiten Flächensensors erfolgt, und wobei für Objekte im zweiten Überlappungsbereich ein automatisches Annotieren gemäß Anspruch 1 unabhängig von Sensordatenframes des ersten Flächensensors erfolgt.

8. Verfahren nach einem der vorhergehenden Ansprüche, wobei das Durchführen der Attributerkennung für das Objekt das Zuordnen mindestens eines Objektattributs zu dem Objekt und das Zuordnen mindestens eines Zustandsparameters zu dem Objektattribut umfasst, das Verfahren ferner umfassend
Gruppieren der Objektattribute basierend auf dem mindestens einen Zustandsparameter, wobei eine erste Gruppe Objektattribute umfasst, für die der mindestens eine Zustandsparameter in einem definierten Wertebereich liegt,
Auswählen einer Stichprobe von einem oder mehreren Objektattributen aus der ersten Gruppe und Bestimmen eines Qualitätsmaßes für die Objektattribute in der Stichprobe;
Falls das Qualitätsmaß der Stichprobe unter einem vordefinierten Schwellenwert liegt, umfasst das Verfahren ferner
Empfangen korrigierter Annotationen für die Datenpunkte in der Stichprobe, und
Nachtrainieren des neuronalen Netzes auf der Grundlage der Datenpunkte in der ersten Stichprobe.

9. Verfahren nach einem der vorhergehenden Ansprüche, wobei der mindestens eine Zustandsparameter ein geographischer Ort, eine Tageszeit, eine Wetterbedingung, eine Sichtbedingung, ein Straßentyp, ein Abstand zu einem Objekt und/oder eine Verkehrsdichte, eine Größe einer Begrenzungsbox, ein Ausmaß einer Verdeckung und/oder Abschneidung, eine Ego-Fahrzeuggeschwindigkeit, ein Kameraparameter, ein Farbbereich und/oder ein Kontrastmaß eines von einer Begrenzungsbox umfassten Bereichs, eine Fahrtrichtung des Ego-Fahrzeugs, astronomische Informationen wie die Sonnenposition relativ zur Fahrtrichtung des Ego-Fahrzeugs umfasst.

10. Nichtflüchtiges computerlesbares Medium, enthaltend Anweisungen, die, wenn sie durch einen Prozessor eines Computersystems ausgeführt werden, das Computersystem veranlassen, ein Verfahren gemäß einem der vorhergehenden Ansprüche auszuführen.

11. Computersystem, umfassend einen Host-Computer, wobei der Host-Computer einen Prozessor, einen Arbeitsspeicher, eine Anzeige, ein Eingabegerät und einen nichtflüchtigen Speicher umfasst, wobei der nichtflüchtige Speicher Anweisungen umfasst, die, wenn sie durch den Prozessor ausgeführt werden, das Computersystem veranlassen, ein Verfahren gemäß einem der vorhergehenden Ansprüche auszuführen.
